# EUROPÄISCHE PATENTANMELDUNG

(11) **EP 4 163 064 A1**
(43) Veröffentlichungstag der Anmeldung: **12.04.2023**
(21) Anmeldenummer: 21201760.2
(22) Anmeldetag: 08.10.2021
(51) Int. Cl.: B25J 15/04

(54) **VORRICHTUNG ZUM KOPPELN EINES WERKZEUGS AN EINEN ROBOTER, ROBOTER UND VERFAHREN ZUM WECHSELN EINES WERKZEUGS**

(71) Anmelder: Robofunktion Systems GmbH, 38442 Wolfsburg (DE)
(72) Erfinder: SCHNEIDER, Hainrich-Andreas, 38120 Braunschweig (DE)
(74) Vertreter: Maiwald GmbH

(57) **Zusammenfassung**

Die Erfindung betrifft eine Vorrichtung (1) zum Koppeln eines Werkzeugs (11) an einen Roboter (19), insbesondere an einen Industrieroboter. Die Vorrichtung (1) umfasst einen Grundkörper (2) zum Verbinden mit dem Roboter (19) sowie einen mit dem Grundkörper (2) verbundenen Verriegelungsmechanismus (3). Der Verriegelungsmechanismus (3) umfasst zumindest einen beweglich gelagerten Verriegelungskörper (7) zum Eingreifen in eine Aussparung (15) des Werkzeugs (11) sowie ein zwischen einer Verriegelungsposition und einer Entriegelungsposition bewegliches Verriegelungselement (5). Das Verriegelungselement (5) drängt in seiner Verriegelungsposition den zumindest einen beweglich gelagerten Verriegelungskörper (7) in eine Sperrposition. Ferner umfasst der Verriegelungsmechanismus (3) ein Vorspannelement (9), das das Verriegelungselement (5) in die Verriegelungsposition drängt und eine elektromagnetische Hubvorrichtung (10), die bei Aktivierung das Verriegelungselement (5) in die Entriegelungsposition drängt. Des Weiteren umfasst die Vorrichtung (1) eine elektrische und/oder elektronische Kopplungsverbindung (16) zum Ansteuern der elektromagnetischen Hubvorrichtung (10). Des Weiteren betrifft die Erfindung einen Roboter (19) mit einer derartigen Vorrichtung (1) sowie ein Verfahren zum Wechseln eines Werkzeugs (11) eines Roboters (19).

## Beschreibung

### Gebiet der Erfindung

Die Erfindung betrifft eine Vorrichtung zum Koppeln eines Werkzeugs an einen Roboter, einen Roboter mit einer Vorrichtung zum Koppeln eines Werkzeugs an einen Roboter sowie ein Verfahren zum Wechseln eines Werkzeugs eines Roboters.

### Hintergrund

Roboter, insbesondere Industrieroboter, sind häufig dazu ausgebildet, verschiedene Aufgaben zu erfüllen, wobei sie für unterschiedliche Aufgaben oft unterschiedliche Werkzeuge benötigen. Um diese Werkzeuge automatisch wechseln zu können, werden Vorrichtungen zum Koppeln der Werkzeuge an Roboter verwendet.

Einige der Vorrichtungen zum Koppeln eines Werkzeugs an einen Roboter umfassen einen elektromotorischen Antrieb, der einen Bolzen in eine sperrende oder eine gelöste Position bewegen kann, wobei der Bolzen in der sperrenden Position in eine entsprechende Aussparung des Werkzeugs eingreift. Ein solcher elektromotorischer Antrieb hat jedoch einen relativ großen Raumbedarf, wodurch die Vorrichtung zum Koppeln eines Werkzeugs an einen Roboter relativ groß wird und damit die Arbeitsmöglichkeiten des Roboters, insbesondere an engen Stellen, eingeschränkt ist.

Andere Vorrichtungen zum Koppeln eines Werkzeugs an einen Roboter verwenden Druckluft um einen vorgespannten Verriegelungsmechanismus aus einer sperrenden in eine gelöste Position zu bringen. Eine solche Vorrichtung hat einen geringeren Raumbedarf als die zuvor genannte Vorrichtung mit einem elektromotorischen Antrieb, benötigt jedoch die Druckluft um zu funktionieren. Dies setzt voraus, dass im Umfeld des Roboters mit Druckluft gearbeitet werden darf und benötigt eine Druckluftversorgung. Die Druckluftversorgung ist dabei relativ energieaufwendig und muss aufwendig gewartet werden. Außerdem kann es kompliziert sein, die Druckluftversorgung bei beweglichen Robotern zu realisieren.

### Zusammenfassung

Es ist daher die Aufgabe der Erfindung, eine Vorrichtung zum Koppeln eines Werkzeugs an einen Roboter vorzuschlagen, die die vorgenannten Probleme beseitigt, die also insbesondere einen geringen Raumbedarf hat und ohne Druckluft auskommt. Ferner ist es die Aufgabe der Erfindung, einen Roboter und ein entsprechendes Verfahren zum Wechseln eines Werkzeugs eines Roboters vorzuschlagen. Diese Aufgaben werden durch den Gegenstand der unabhängigen Patentansprüche gelöst. Weiterbildungen der Erfindung ergeben sich aus den Unteransprüchen und der folgenden Beschreibung.

Ein Aspekt der Erfindung betrifft eine Vorrichtung zum Koppeln eines Werkzeugs an einen Roboter. Als Werkzeug sind dabei vielfältige Werkzeuge für Roboter denkbar, beispielsweise greifende Werkzeuge, schraubende Werkzeuge, formende Werkzeuge oder schweißende Werkzeuge. Als Roboter sind ebenfalls vielfältige Varianten denkbar, die zur Verwendung von verschiedenen Werkzeugen ausgebildet sind oder zumindest dafür einrichtbar sind. Insbesondere handelt es sich bei dem Roboter um einen Industrieroboter, also einen Roboter, der im Industrieumfeld, beispielsweise in Fertigungsanlagen, zum Einsatz kommt.

Die Vorrichtung umfasst dabei einen Grundkörper, der insbesondere zum Verbinden mit dem Roboter ausgebildet ist. Die Verbindung mit dem Roboter erfolgt dabei beispielsweise über eine Schraubverbindung, die sich bei der Arbeit des Roboters nicht löst und eine genügende Kraft- und Drehmomentübertragung gewährleistet. Zur weiteren Verstärkung der Verbindung können auch noch formschlüssige Elemente vorgesehen sein.

Des Weiteren umfasst die Vorrichtung einen mit dem Grundkörper verbundenen Verriegelungsmechanismus. Der Verriegelungsmechanismus ist dabei insbesondere unbeweglich mit dem Grundkörper verbunden. Mit dem Verriegelungsmechanismus wird das mit dem Roboter zu koppelnde Werkzeug befestigt.

Der Verriegelungsmechanismus umfasst zumindest einen beweglich gelagerten Verriegelungskörper. Insbesondere kann der Verriegelungsmechanismus eine Mehrzahl solcher Verriegelungskörper umfassen. Diese Verriegelungskörper sind zum Eingreifen in eine Aussparung des Werkzeugs ausgebildet. Eine solche Aussparung kann beispielsweise eine Nut sein. Es sind jedoch auch weitere Aussparungen wie beispielsweise Bohrungen denkbar und es ist auch denkbar, dass jedem Verriegelungskörper eine Aussparung zugeordnet ist. Durch das Eingreifen des Verriegelungskörpers in die Aussparung wird das Werkzeug dann formschlüssig mit der Vorrichtung verbunden.

Des Weiteren umfasst der Verriegelungsmechanismus ein zwischen einer Verriegelungsposition und einer Entriegelungsposition bewegliches Verriegelungselement. In der Verriegelungsposition drängt dabei das Verriegelungselement den zumindest einen beweglich gelagerten Verriegelungskörper in eine Sperrposition. In dieser Sperrposition greift der Verriegelungskörper in die Aussparung des Werkzeugs ein und stellt somit den Formschluss zwischen der Vorrichtung und dem Werkzeug her. In der Entriegelungsposition des Verriegelungselements kann der Verriegelungskörper frei beweglich sein, so dass der Verriegelungskörper durch eine bei einer Entfernung eines Werkzeugs oder bei einer Anbringung eines anderen Werkzeugs auftretende Kraft in eine Position bewegt wird, die das Entfernen bzw. Anbringen des Werkzeugs nicht behindert, also insbesondere aus der Sperrposition heraus bewegt wird. Alternativ dazu kann derdas Verriegelungselement in seiner Entriegelungsposition den Verriegelungskörper in eine Löseposition drängen, wobei der Verriegelungskörper in der Löseposition nicht in die Aussparung des Werkzeugs eingreift.

Ferner umfasst der Verriegelungsmechanismus ein Vorspannelement. Dieses Vorspannelement drängt das Verriegelungselement in die Verriegelungsposition. Das heißt, in Abwesenheit weiterer Kräfte wird das Verriegelungselement durch das Vorspannelement in die Verriegelungsposition bewegt und/oder in der Verriegelungsposition gehalten. Da das Verriegelungselement in der Verriegelungsposition den Verriegelungskörper in die Sperrposition drängt, bewirkt das Vorspannelement, dass der Verriegelungskörper in der Sperrposition gehalten wird, wo er in die Aussparung des Werkzeugs eingreift und damit das Werkzeug durch Formschluss an der Vorrichtung gehalten wird.

Des Weiteren umfasst der Verriegelungsmechanismus eine elektromagnetische Hubvorrichtung. Bei einer Aktivierung der elektromagnetischen Hubvorrichtung wird das Verriegelungselement in die Entriegelungsposition gedrängt. Die elektromagnetische Hubvorrichtung übt also auf das Verriegelungselement eine Kraft aus, die der Kraft, die das Vorspannelement auf das Verriegelungselement ausübt, entgegengerichtet ist, wobei der Betrag der Kraft durch die elektromagnetische Hubvorrichtung größer als der Betrag der Kraft durch das Vorspannelement ist. Bei Aktivieren der elektromagnetischen Hubvorrichtung wird also das Verriegelungselement in die Entriegelungsposition bewegt, wodurch der Verriegelungskörper aus der Sperrposition bewegt werden kann bzw. bewegt wird. Sodann ist der Formschluss zwischen der Vorrichtung und dem Werkzeug nicht mehr gegeben, so dass ein Werkzeug von der Vorrichtung entfernt und ein anderes Werkzeug an die Vorrichtung angebracht werden kann.

Im Vergleich zu einer elektromotorischen Bewegung eines Verriegelungskörpers benötigt der genannte Verriegelungsmechanismus weniger Raum, so dass eine kleiner Vorrichtung resultiert, die den Roboter in der Bewegungsfreiheit nicht einschränkt. Des Weiteren ist zur Ansteuerung und zum Betreiben des Verriegelungsmechanismus, insbesondere der elektromagnetischen Hubvorrichtung, keine Druckluft notwendig, so dass die aufwendige und teure Versorgung mit Druckluft entfällt. Die Vorrichtung kann jedoch derart gestaltet werden, dass Werkzeuge, die für eine Kopplung mit Druckluft vorgesehen waren, auch mit der oben beschriebenen Vorrichtung verwendet werden können.

Zum Ansteuern der elektromagnetischen Hubvorrichtung umfasst die Vorrichtung eine elektrische und/oder elektronische Kopplungsverbindung. Im Falle einer rein elektrischen Kopplungsverbindung können beispielsweise zwei Kontakte ausreichen, die über zwei elektrische Leiter die elektromagnetische Hubvorrichung mit elektrischer Energie versorgen. Die elektromagnetische Hubvorrichtung wird dann direkt über das Vorhandensein bzw. Fehlen von elektrischer Spannung an den beiden Kontakten gesteuert. Die elektrische und/oder elektronische Kopplungsverbindung kann beispielsweise auch ein Feldbus sein, der neben dem Bereitstellen einer Spannungsversorgung auch elektronische Signale übermittelt. Dann kann die Steuerung der elektromagnetischen Hubvorrichtung ein Teil der Vorrichtung sein.

Dadurch, dass nur eine elektrische und/oder elektronische Verbindung zum Roboter notwendig ist, kann die Vorrichtung sehr einfach in Robotersyteme integriert werden, die sowieso über elektrische und elektronische Komponenten verfügen.

In einigen Ausführungsformen umfasst der Verriegelungsmechanismus ein Zentrierelement. Ein solches Zentrierelement ist dazu ausgebildet, das Werkzeug und den Verriegelungsmechanismus passend zueinander auszurichten. Ein derartiges Zentrierelement kann ein hervorstehendes Element sein, insbesondere ein Zentrierbolzen. Ganz insbesondere ist dieser Zentrierbolzen aus gehärtetem Edelstahl gefertigt. Das hervorstehende Element greift dabei in eine entsprechende Aussparung im Werkzeug ein. Alternativ oder zusätzlich dazu kann das Zentrierelement eine Aussparung sein, in die ein vom Werkzeug hervorstehendes Element eingreift. Das Zentrierelement kann zusätzlich zum passenden Ausrichten des Verriegelungsmechanismus zum Werkzeug auch Kräfte zwischen der Vorrichtung und dem Werkzeug übertragen.

In einigen Ausführungsformen umfasst die Vorrichtung ein Kraftübertragungselement, das der Kraftübertragung zwischen der Vorrichtung und dem Werkzeug dient, insbesondere zur Übertragung von Drehmomenten. Das Kraftübertragungselement ist insbesondere ein Stift, der in eine entsprechende Aussparung des Werkzeugs eingreift. Alternativ oder zusätzlich kann die Vorrichtung auch eine Aussparung umfassen, wobei die Aussparung zur Aufnahme eines werkzeugseitigen Kraftübertragungselements, beispielsweise eines Stifts, ausgebildet ist. Auch in diesem Fall kann durch das werkzeugseitige Kraftübertragungselement eine Kraft, insbesondere ein Drehmoment, zwischen der Vorrichtung und dem Werkzeug übertragen werden.

In einigen Ausführungsformen umfasst die Vorrichtung zumindest zwei Verriegelungsmechanismen. In diesem Fall kann eine Übertragung eines Drehmoments zwischen dem Vorrichtung und dem Werkzeug auch über das Zusammenspiel der beiden Verriegelungsmechanismen erfolgen.

In einigen Ausführungsformen besteht der Grundkörper aus Leichtmetall, insbesondere aus Aluminium. Hierdurch wird ein geringes Gewicht der Vorrichtung erreicht, so dass eine hohe Nutzlast des Roboters erhalten bleibt. Des Weiteren sind Leichtmetalle nicht ferromagnetisch, so dass sie keinen Einfluss auf die elektromagnetische Hubvorrichtung haben.

In einigen Ausführungsformen ist der zumindest eine Verriegelungskörper zumindest eine Kugel. Eine Kugel ist dabei leicht beweglich und sehr robust. Der Verriegelungsmechanismus weist dann insbesondere zumindest einen Kugelbund auf, der die Kugeln am Herausfallen hindert. In der Sperrposition der Kugeln werden diese vom Verriegelungselement in den Kugelbund gedrängt. Alternativ kann der Verriegelungskörper beispielsweise ein Bolzen sein, der insbesondere schräg zur Bewegungsrichtung des Verriegelungsmechanismus angeordnet und in einer Bohrung geführt ist.

In einigen Ausführungsformen weist das Verriegelungselement zumindest eine zu der Richtung zwischen Verriegelungsposition und Entriegelungsposition, also zur Bewegungsrichtung des Verriegelungsmechanismus, schräge Fläche auf. Diese schräge Fläche steht dabei in Kontakt mit dem zumindest einen Verriegelungskörper. Eine Bewegung des Verriegelungselements in seiner Bewegungsrichtung bewirkt damit eine Bewegung des Verriegelungskörpers in einer Richtung senkrecht zur Bewegungsrichtung des Verriegelungselements.

In einigen Ausführungsformen besteht der zumindest eine Verriegelungskörper und/oder das Verriegelungselement aus gehärtetem Edelstahl. So wird eine langlebige Vorrichtung geschaffen, die eine Vielzahl an Werkzeugwechseln übersteht. Damit das Verriegelungselement von der elektromagnetischen Hubvorrichtung bewegt werden kann, besteht es zumindest teilweise aus magnetischem Edelstahl oder umfasst ein magnetisches Element.

In einigen Ausführungsformen ist das Vorspannelement eine Feder. Eine Feder kann dabei leicht in der gewünschten Härte gefertigt werden und hat eine hohe Lebensdauer. Alternativ hierzu kann des Vorspannelement beispielsweise aus einem elastischen Kunststoff bestehen.

In einigen Ausführungsformen umfasst die elektromagnetische Hubvorrichtung eine elektromagnetische Spule. So können starke Magnetfelder erzeugt werden. Die elektromagnetische Hubvorrichtung ist dabei insbesondere ein Elektromagnet oder ein Kurzhubmagnet. Als Elektromagnet erzeugt die elektromagnetische Hubvorrichtung ein Magnetfeld, von dem das Verriegelungselement angezogen wird. Ist die elektromagnetische Hubvorrichtung ein Kurzhubmagnet, so ist zumindest ein Teil des Verriegelungselements als bewegliches Teil eines Magnetkerns ausgebildet, wobei die auf das Verriegelungselement wirkende Kraft aus dem Reluktanzprinzip resultiert. In beiden Fällen lässt sich das Verriegelungselement effektiv und schnell bewegen.

In einigen Ausführungsbeispielen umfasst die elektrische und/oder elektronische Kopplungsverbindung eine Gleichspannungsversorgung. Mittels dieser Gleichspannungsversorgung wird dann insbesondere die elektromagnetische Hubvorrichtung betrieben. Die Gleichspannungsversorgung erfolgt dabei insbesondere mit 24 V. Zum einen ist diese Spannung bei vielen Robotern schon direkt verfügbar, zum anderen kann mit 24 V problemlos ein Magnetfeld erzeugt werden, das stark genug ist, um das Verriegelungselement in die Entriegelungsposition zu bewegen und schließlich sind 24 V noch nicht als gefährlich einzustufen.

In einigen Ausführungsbeispielen umfasst die Vorrichtung eine elektrische und/oder elektronische Werkzeuganbindung, beispielsweise zumindest zwei Kontakte oder einen Feldbus. Die elektrische und/oder elektronische Werkzeuganbindung ist dabei insbesondere werkzeugseitig am Grundkörper angeordnet, so dass bei einer Kopplungs des Werkzeugs an die Vorrichtung auch gleich der elektrische und/oder elektronische Kontakt hergestellt wird. So wird eine Spannungsversorgung des Werkzeugs und/oder Kommunikation mit dem Werkzeug erreicht.

Ein weiterer Aspekt der Erfindung betrifft einen Roboter mit einer Vorrichtung gemäß der vorangegangenen Beschreibung. Als Roboter sind dabei vielfältige Varianten denkbar, die zur Verwendung von verschiedenen Werkzeugen ausgebildet sind oder zumindest dafür einrichtbar sind. Insbesondere handelt es sich bei dem Roboter um einen Industrieroboter, also einen Roboter, der im Industrieumfeld, beispielsweise in Fertigungsanlagen, zum Einsatz kommt. Der Roboter mit der besagten Vorrichtung kann dabei einfach, insbesondere nur elektrisch angesteuert, und automatisch einen Wechsel des an den Roboter gekoppelten Werkzeugs vornehmen. Weitere Vorteile des Roboters mit der besagten Vorrichtung ergeben sich analog zu den oben aufgeführten Vorteilen der Vorrichtung zum Koppeln eines Werkzeugs an einen Roboter.

Ein nochmals weiterer Aspekt der Erfindung betrifft ein Verfahren zum Wechseln eines Werkzeugs eines Roboters. Als Roboter sind dabei vielfältige Varianten denkbar, die zur Verwendung von verschiedenen Werkzeugen ausgebildet sind oder zumindest dafür einrichtbar sind. Insbesondere handelt es sich bei dem Roboter um einen Industrieroboter, also einen Roboter, der im Industrieumfeld, beispielsweise in Fertigungsanlagen, zum Einsatz kommt.

Bei dem Verfahren wird ein Verriegelungselement einer Vorrichtung zum Koppeln eines Werkzeugs an den Roboter aus einer Verriegelungsposition in eine Entriegelungsposition bewegt. Diese Bewegung erfolgt mittels einer elektromagnetischen Hubvorrichtung entgegen einer Kraft eines Vorspannelements. Das heißt, das Vorspannelement übt eine Kraft auf das Verriegelungselement in Richtung der Verriegelungsposition aus, so dass bei ausgeschalteter elektromagnetischer Hubvorrichtung das Verriegelungselement in der Verriegelungsposition verbleibt. Die elektromagnetische Hubvorrichtung übt eine der Kraft des Vorspannelements entgegengesetzte Kraft auf das Verriegelungselement aus, wobei der Betrag der Kraft der elektromagnetischen Hubvorrichtung größer ist als der Betrag der Kraft des Vorspannelements. So wird das Verriegelungselement in die Entriegelungsposition bewegt. Befindet sich das Verriegelungselement dann in der Entriegelungsposition, wird zumindest ein Verriegelungskörper aus einer Sperrposition, in der er in eine Aussparung des Werkzeugs eingreift und damit durch Formschluss das Werkzeug mit der Vorrichtung und damit mit dem Roboter verbindet, bewegbar.

Daraufhin wird ein nun nicht mehr durch Formschluss mit der Vorrichtung und damit mit dem Roboter verbundene erste Werkzeug von der Vorrichtung entfernt. Sodann wird ein zweites Werkzeug mit der Vorrichtung verbunden.

Um das zweite Werkzeug durch Formschluss fest mit der Vorrichtung zu verbinden wird dann die elektromagnetische Hubvorrichtung ausgeschaltet. Das Verriegelungselement wird so durch das Vorspannelement aus der Entriegelungsposition wieder in die Verriegelungsposition bewegt, wodurch der zumindest eine Verriegelungskörper in die Sperrposition gedrängt wird. In der Sperrposition greift der zumindest eine Verriegelungskörper dann in eine Aussparung des zweiten Werkzeugs ein, so dass ein Formschluss zwischen der Vorrichtung und dem zweiten Werkzeug entsteht.

Mittels des Verfahrens kann das Wechseln eines Werkzeugs eines Roboters einfach, insbesondere nur elektrisch angesteuert, und schnell erfolgen.

In einigen Ausführungsformen ist die Vorrichtung zum Koppeln eines Werkzeugs an den Roboter gemäß der vorangegangenen Beschreibung ausgebildet. Weitere Vorteile des Verfahrens ergeben sich dann analog zu den oben aufgeführten Vorteilen der Vorrichtung zum Koppeln eines Werkzeugs an einen Roboter.

Es versteht sich, dass eine bevorzugte Ausführungsform auch aus einer Kombination von abhängigen Ansprüchen mit dem jeweiligen unabhängigen Anspruch erzielt werden kann.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

### Kurze Beschreibung der Figuren

Dabei zeigen:
- Fig. 1a―1c: schematische Längsschnitte durch ein Ausführungsbeispiel einer Vorrichtung zum Koppeln eines Werkzeugs an einen Roboter;
- Fig. 2: einen schematischen Längsschnitt durch ein weiteres Ausführungsbeispiel einer Vorrichtung zum Koppeln eines Werkzeugs an einen Roboter; und
- Fig. 3: eine perspektivische Ansicht eines nochmals weiteren Ausführungsbeispiels einer Vorrichtung zum Koppeln eines Werkzeugs an einen Roboter.

### Detaillierte Beschreibung von Ausführungsformen

In den Figuren kennzeichnen gleiche Bezugszeichen entweder gleiche Elemente oder Elemente mit gleichwertigen Funktionen. Elemente, die schon beschrieben wurden, werden nicht notwendigerweise in nachfolgenden Figuren noch einmal beschrieben.

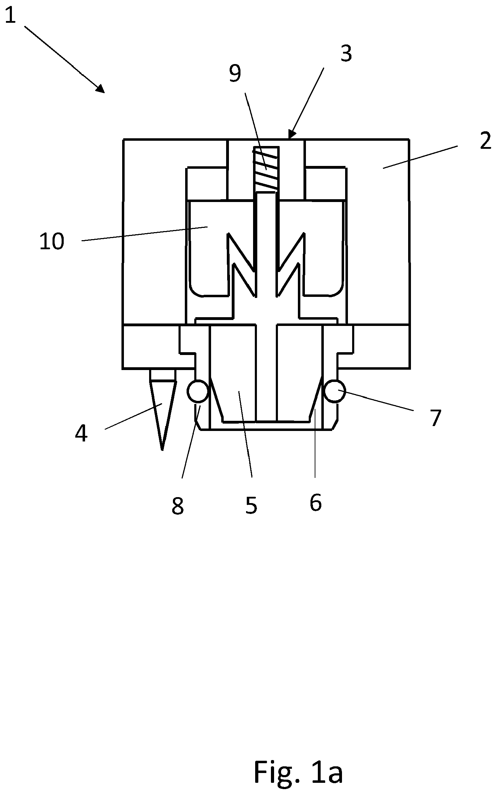

Figur 1a zeigt einen schematischen Längsschnitt durch ein Ausführungsbeispiel einer Vorrichtung 1 zum Koppeln eines Werkzeugs an einen Roboter. Als Roboter sind dabei verschiedene Roboter denkbar, die zum Verwenden von verschiedenen Werkzeugen ausgebildet sind oder einsetzbar sind. Insbesondere kann es sich bei dem Roboter um einen Industrieroboter handeln, also einen Roboter, der in einem Industrieumfeld, beispielsweise in Fertigungsanlagen, zum Einsatz kommt.

Die Vorrichtung 1 umfasst einen Grundkörper 2, einen Verriegelungsmechanismus 3, der mit dem Grundkörper verbunden ist, sowie ein als Stift ausgebildetes Kraftübertragungselement 4.

Der Grundkörper 2 ist beispielsweise aus Alumnium gefertigt und ist zum Verbinden der Vorrichtung 1 mit dem Roboter ausgebildet. Dies kann beispielsweise über eine hier nicht dargestellte Schraubverbindung erfolgen.

Das Kraftübertragungselement 4 ist fest mit dem Grundkörper 2 verbunden und ist dazu ausgebildet, in eine entsprechende Aussparung des Werkzeugs einzugreifen und damit Drehmomente zwischen dem Werkzeug und der Vorrichtung 1 zu übertragen.

Der Verriegelungsmechanismus 3 umfasst ein Verriegelungselement 5, das zwischen einer Entriegelungsposition und einer Verriegelungsposition bewegbar ist. In Figur 1a ist das Verriegelungselement 5 in der Verriegelungsposition dargestellt. In der Verriegelungsposition drängt eine schräge Fläche 6 des Verriegelungselements 5 als Kugeln ausgebildete Verriegelungskörper 7 in einen Kugelbund 8. Die Verriegelungskörper 7 befinden sich so in einer Sperrposition.

Des Weiteren umfasst der Verriegelungsmechanismus 3 ein als Feder ausgebildetes Vorspannelement 9. Das Vorspannelement 9 drängt dabei das Verriegelungselement 5 in die Verriegelungsposition, so dass sich ohne weitere Krafteinwirkung das Verriegelungselement 5 in der Verriegelungsposition und damit die Verriegelungskörper 7 in der Sperrposition befinden.

Zudem umfasst der Verriegelungsmechanismus 3 eine elektromagnetische Hubvorrichtung 10, die im vorliegenden Ausführungsbeispiel als Elektromagnet ausgebildet ist. Mittels dieser elektromagnetischen Hubvorrichtung 10 wird ein magnetisches Feld erzeugt, das das zumindest teilweise magnetische Verriegelungselement 5 entgegen der Kraft des Vorspannelements 9 aus der Verriegelungsposition in die Entriegelungsposition bewegt. Alternativ hierzu kann die elektromagnetische Hubvorrichtung 10 auch als Kurzhubmagnet ausgebildet sein, wobei die Krafterzeugung dann auf dem Reluktanzprinzip basiert.

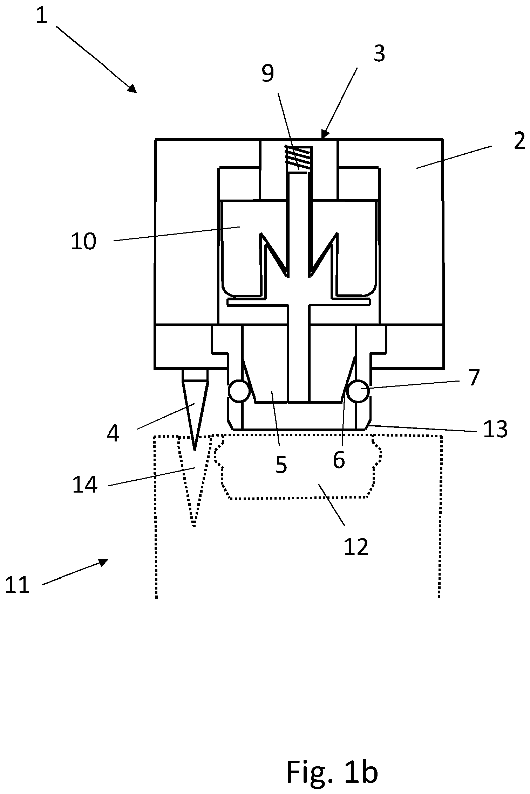

Figur 1b zeigt die Vorrichtung 1, wenn die elektromagnetische Hubvorrichtung 10 eingeschaltet ist und damit das Verriegelungselement 5 in die Entriegelungsposition bewegt wurde. Durch die schrägen Flächen 6 des Verriegelungselements 5 werden die Verriegelungskörper 7 nicht mehr in die Sperrposition gedrängt und können sich aus der Sperrposition heraus bewegen.

Des Weiteren zeigt Figur 1b einen schematischen Längsschnitt durch ein Werkzeug 11, das hier gepunktelt dargestellt ist und gerade an die Vorrichtung 1 herangeführt wird. Details des Werkzeugs 11 sind nicht dargestellt, da eine weite Vielfalt an verschiedenen Werkzeugen verwendet werden kann. Da sich die Verriegelungskörper 7 nicht in der Sperrposition befinden, kann der Verriegelungsmechanismus 3 in eine Kopplungsöffnung 12 des Werkzeugs 11 eingeführt werden. Hierbei wird die Ausrichtung von Vorrichtung 1 und Werkzeug 11 durch ein als Zentrierbolzen ausgebildetes Zentrierelement 13 des Verriegelungsmechanismus 3 vereinfacht. Des Weiteren umfasst das Werkzeug 11 eine Kraftübertragungsaussparung 14, in die das Kraftübertragungselement 4 eingreifen kann, um Drehmomente zwischen der Vorrichtung 1 und dem Werkzeug 11 zu übertragen.

Schließlich zeigt Figur 1b einen schematischen Längsschnitt durch die Vorrichtung 1 mit verbundenem Werkzeug 11. Nachdem das Werkzeug 11 vollständig an die Vorrichtung 1 herangeführt wurde, wurde die elektromagnetische Hubvorrichtung 10 wieder ausgeschaltet, so dass das Vorspannelement 9 das Verriegelungselement 5 in die Verriegelungsposition gedrängt hat, wodurch die Verriegelungskörper 7 in die Sperrposition gedrängt wurden. In der Sperrposition greifen die Verriegelungskörper 7 in eine als Nut ausgebildete Aussparung 15 des Werkzeugs 11 ein. Dadurch entsteht ein Formschluss, der das Werkzeug 11 fest mit der Vorrichtung 1 verbindet.

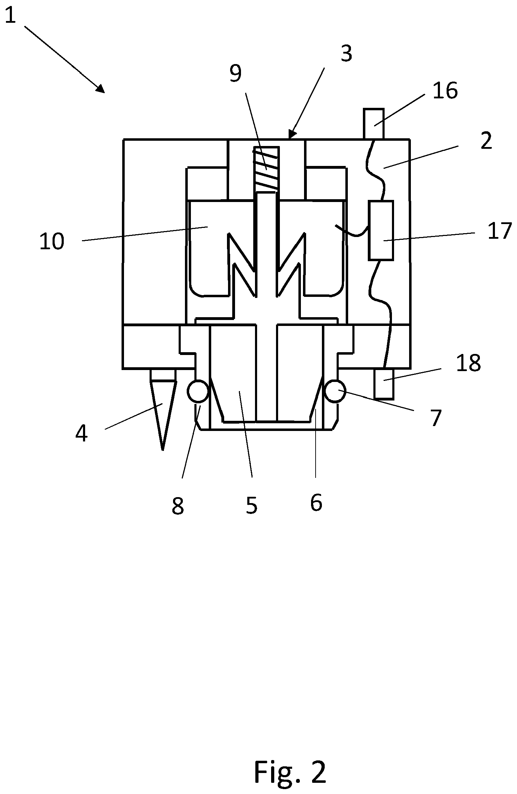

Figur 2 zeigt einen schematischen Längsschnitt durch ein weiteres Ausführungsbeispiel einer Vorrichtung 1 zum Koppeln eines Werkzeugs 11 an einen Roboter. In Figur 2 wird ferner eine als Feldbus ausgebildete elektrische und elektronische Kopplungsverbindung 16 gezeigt, über die die Spannungsversorgung und Steuerung vom Roboter erfolgt. Die Kopplungsverbindung 16 ist mit einer Steuereinheit 17 verbunden, die die Spannungsversorgung und Steuerungssignale empfängt. Diese Steuereinheit 17 ist wiederum mit der elektromagnetischen Hubvorrichtung 10 verbunden, die von der Steuereinheit 17 gesteuert wird. Ferner ist die Steuereinheit 17 mit einer ebenfalls als Feldbus ausgebildeten elektrischen und elektronischen Werkzeuganbindung 18 verbunden. Hierdurch kann die Spannungsversorgung des mit der Vorrichtung 1 verbundenen Werkzeugs 11 hergestellt werden und es können Steuerungssignale an das Werkzeug 11 übertragen werden.

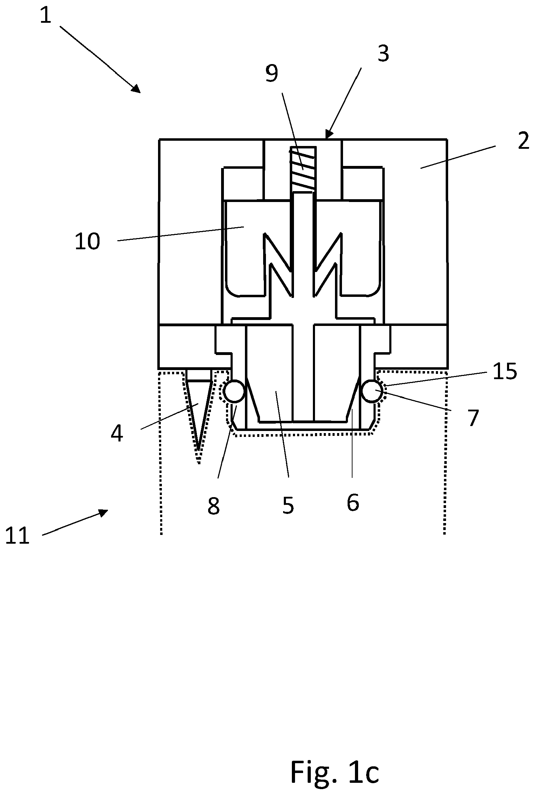

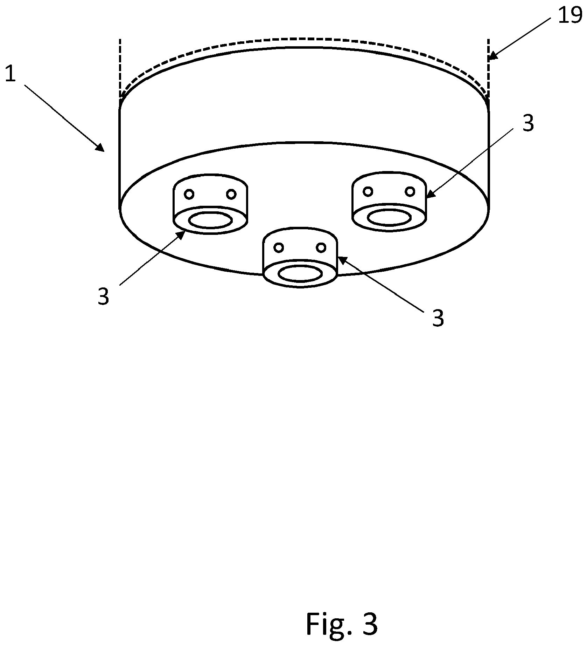

Ferner zeigt Figur 3 eine perspektivische Ansicht von schräg unten (in der Orientierung der Figuren 1 und 2) auf ein nochmals weiteres Ausführungsbeispiel einer Vorrichtung 1 zum Koppeln eines Werkzeugs 11 an einen Roboter 19, von dem hier nur der Anschlussbereich schematisch und gestrichelt dargestellt ist. Diese Vorrichtung 1 umfasst drei Verriegelungsmechanismen 3, wobei das zu koppelnde Werkzeug 11 dann ebenfalls drei Kopplungsöffnungen 12 aufweist. Hierdurch wird ein größerer Kraftübertrag in Richtung der Verbindung zwischen Werkzeug 11 und Vorrichtung 1 ermöglicht und eine Drehmomentübertragung findet über die drei Verriegelungsmechanismen 3 statt, so dass ein separates Kraftübertragungselement 4 entfallen kann. Zur gesteigerten Drehmomentübertragung können allerdings noch weitere Kraftübertragungselemente 4 verwendet werden.

## Patentansprüche

1. Vorrichtung zum Koppeln eines Werkzeugs (11) an einen Roboter (19), insbesondere an einen Industrieroboter, umfassend
einen Grundkörper (2) zum Verbinden mit dem Roboter (19);
einen mit dem Grundkörper (2) verbundenen Verriegelungsmechanismus (3) mit
zumindest einem beweglich gelagerten Verriegelungskörper (7) zum Eingreifen in eine Aussparung (15) des Werkzeugs (11);
einem zwischen einer Verriegelungsposition und einer Entriegelungsposition beweglichen Verriegelungselement (5), das in seiner Verriegelungsposition den zumindest einen beweglich gelagerten Verriegelungskörper (7) in eine Sperrposition drängt;
einem Vorspannelement (9), das das Verriegelungselement (5) in die Verriegelungsposition drängt; und
einer elektromagnetischen Hubvorrichtung (10), die bei Aktivierung das Verriegelungselement (5) in die Entriegelungsposition drängt; und
eine elektrische und/oder elektronische Kopplungsverbindung (16) zum Ansteuern der elektromagnetischen Hubvorrichtung (10).

2. Vorrichtung nach Anspruch 1, wobei der Verriegelungsmechanismus (3) ein Zentrierelement (13), insbesondere einen Zentrierbolzen, ganz insbesondere aus gehärtetem Stahl, umfasst.

3. Vorrichtung nach Anspruch 1 oder 2, ferner umfassend zumindest ein Kraftübertragungselement (4), insbesondere einen Stift, und/oder eine Aussparung zur Aufnahme eines werkzeugseitigen Kraftübertragungselements.

4. Vorrichtung nach einem der Ansprüche 1 bis 3, umfassend zumindest zwei Verriegelungsmechanismen.

5. Vorrichtung nach einem der Ansprüche 1 bis 4, wobei der Grundkörper (2) aus Leichtmetall, insbesondere aus Aluminium, besteht.

6. Vorrichtung nach einem der Ansprüche 1 bis 5, wobei der zumindest eine Verriegelungskörper (7) zumindest eine Kugel ist und der Verriegelungsmechanismus (3) insbesondere zumindest einen Kugelbund (8) aufweist, wobei die Kugel in der Sperrposition in den Kugelbund (8) gedrängt wird.

7. Vorrichtung nach einem der Ansprüche 1 bis 6, wobei das Verriegelungselement (5) zumindest eine zu der Richtung zwischen Verriegelungsposition und Entriegelungsposition schräge Fläche (6) aufweist, die in Kontakt mit dem zumindest einen Verriegelungskörper (7) steht.

8. Vorrichtung nach einem der Ansprüche 1 bis 7, wobei der zumindest eine Verriegelungskörper (7) und/oder das Verriegelungselement (5) aus gehärtetem Edelstahl besteht.

9. Vorrichtung nach einem der Ansprüche 1 bis 8, wobei das Vorspannelement (9) eine Feder ist.

10. Vorrichtung nach einem der Ansprüche 1 bis 9, wobei die elektromagnetische Hubvorrichtung (10) eine elektromagnetische Spule umfasst und insbesondere ein Elektromagnet oder ein Kurzhubmagnet ist.

11. Vorrichtung nach einem der Ansprüche 1 bis 10, wobei die elektrische und/oder elektronische Kopplungsverbindung eine Gleichspannungsversorgung, insbesondere mit 24 V, umfasst.

12. Vorrichtung nach einem der Ansprüche 1 bis 11, ferner umfassend eine elektrische und/oder elektronische Werkzeuganbindung (18).

13. Roboter, insbesondere Industrieroboter, umfassend eine Vorrichtung (1) nach einem der Ansprüche 1 bis 12.

14. Verfahren zum Wechseln eines Werkzeugs (11) eines Roboters (19), insbesondere eines Industrieroboters, wobei
ein Verriegelungselement (5) einer Vorrichtung (1) zum Koppeln eines Werkzeugs (11) an den Roboter (19) mittels einer elektromagnetischen Hubvorrichtung (10) entgegen einer Kraft eines Vorspannelements (9) aus einer Verriegelungsposition in eine Entriegelungsposition bewegt wird, wodurch zumindest ein Verriegelungskörper (7) aus einer Sperrposition bewegbar ist;
ein erstes Werkzeug (11) von der Vorrichtung (1) entfernt wird;
ein zweiten Werkzeug (11) mit der Vorrichtung (1) verbunden wird; und
die elektromagnetische Hubvorrichtung (10) ausgeschaltet wird, so dass das Verriegelungselement (5) durch das Vorspannelement (9) aus der Entriegelungsposition in die Verriegelungsposition bewegt wird, wodurch der zumindest eine Verriegelungskörper (7) in die Sperrposition gedrängt wird.

15. Verfahren nach Anspruch 14, wobei die Vorrichtung (1) zum Koppeln eines Werkzeugs (11) an den Roboter (19) gemäß einem der Ansprüche 1 bis 12 ausgebildet ist.
